(19) Europäisches Patentamt / European Patent Office / Office européen des brevets

(11) **EP 3 842 840 B1**

(12) **FASCICULE DE BREVET EUROPEEN**

(45) Date de publication et mention de la délivrance du brevet:
**27.09.2023 Bulletin 2023/39**

(21) Numéro de dépôt: **20217084.1**

(22) Date de dépôt: **23.12.2020**

(51) Classification Internationale des Brevets (IPC):
**G01T 1/24** $^{(2006.01)}$

(52) Classification Coopérative des Brevets (CPC):
**G01T 1/247**

(54) **PROCÉDÉ DE DÉTERMINATION D'UN BIAIS AFFECTANT DES PIXELS D'UN DÉTECTEUR PIXELLLISÉ DE RAYONNEMENT IONISANT**

VERFAHREN ZUR BESTIMMUNG EINER VERZERRUNG, DIE DIE PIXEL EINES PIXELIERTEN DETEKTORS FÜR IONISIERENDE STRAHLUNG BEEINFLUSST

METHOD FOR DETERMINING A BIAS AFFECTING PIXELS OF A PIXELLATED IONISING RADIATION DETECTOR

(84) Etats contractants désignés:
AL AT BE BG CH CY CZ DE DK EE ES FI FR GB GR HR HU IE IS IT LI LT LU LV MC MK MT NL NO PL PT RO RS SE SI SK SM TR

(30) Priorité: **24.12.2019 FR 1915587**

(43) Date de publication de la demande:
**30.06.2021 Bulletin 2021/26**

(73) Titulaire: **COMMISSARIAT À L'ÉNERGIE ATOMIQUE ET AUX ÉNERGIES ALTERNATIVES**
**75015 Paris (FR)**

(72) Inventeur: **Stanchina, Sylvain**
**38054 Grenoble Cedex 09 (FR)**

(74) Mandataire: **INNOV-GROUP**
**310, avenue Berthelot**
**69372 Lyon Cedex 08 (FR)**

(56) Documents cités:
**WO-A1-2018/229470    US-A1- 2007 145 274**

**Description**

## DOMAINE TECHNIQUE

L'invention concerne les détecteurs de rayonnement ionisants, en particulier les rayonnements photoniques X ou gamma.

## ART ANTERIEUR

Les dispositifs de détection de rayonnement ionisants, basés sur des matériaux détecteurs gazeux, semi-conducteurs ou scintillateurs, permettent d'obtenir des impulsions électriques formées par des interactions du rayonnement dans le matériau détecteur. L'amplitude de chaque impulsion dépend de l'énergie déposée par le rayonnement au cours de chaque interaction. Ces dispositifs dont fréquemment utilisés dans des applications nécessitant de connaître l'énergie du rayonnement ionisant incident au détecteur. Les domaines d'application sont larges, et comprennent notamment le contrôle non destructif, par exemple le contrôle de bagages, le diagnostic médical ou les mesures dans des installations nucléaires. Généralement, les dispositifs utilisés sont pixélisés, de manière à générer une information spatialement résolue. Le dispositif de détection peut être linéaire lorsque les pixels sont alignés sous la forme d'une ligne. Il peut également être bidimensionnel lorsque les pixels sont répartis selon une matrice, de façon à former une image.

Sous l'effet d'une interaction d'un rayonnement dans le matériau détecteur, un ou plusieurs pixels génèrent une impulsion électrique, dont l'amplitude est corrélée avec l'énergie libérée par le rayonnement lors de l'interaction. Chaque pixel est raccordé à un circuit électronique de traitement des impulsions. Ce circuit permet une estimation aussi précise que possible de leurs amplitudes. L'estimation de l'amplitude des impulsions générées par chaque pixel permet d'estimer l'énergie de l'interaction. Cette énergie doit être estimée aussi précisément que possible. La plage d'énergie adressée est généralement comprise entre 10 keV et quelques centaines de keV, voire quelques MeV. Il est souhaitable que la précision de l'énergie soit de l'ordre du %, voire inférieure.

L'estimation de l'amplitude permet de former un spectre du rayonnement détecté par chaque pixel, selon les principes bien connus de la spectrométrie. On rappelle qu'un spectre est un disposant d'une relation entre l'amplitude d'une impulsion et une énergie correspondant à cette amplitude, un spectre d'amplitude peut être transformé en un spectre d'énergie. L'estimation de l'énergie permet également d'établir une image spectrale, c'est-à-dire une image dans une ou plusieurs bandes d'énergie prédéterminées.

Le document WO2018229470A1 décrit un procédé d'estimation d'une énergie libérée par une particule dans un détecteur pixelisé en combinant les amplitudes d'impulsions détectées par différents pixels. Le document US2007145274A1 décrit un détecteur infra-rouge pixelisé.

L'estimation d'une énergie, à partir de l'amplitude de chaque impulsion, est effectuée en prenant un compte un terme de gain et un terme de biais, de façon à former une relation, généralement linéaire. Le gain est un terme multiplicatif, tandis que le biais est un terme additif. Ainsi, si A correspond à une amplitude de l'impulsion, et E correspond à l'énergie libérée dans le détecteur, on peut déterminer un gain $\alpha$ et un biais $\beta$, tel que $E = \alpha A - \beta$. $\alpha$ et $\beta$ sont des scalaires positifs. Lorsqu'on utilise un détecteur pixelisé, le biais $\beta$ et le gain $\alpha$ peuvent être déterminés pour chaque pixel.

Une dérive du biais ou du gain entraîne une dérive de l'énergie estimée à partir de l'amplitude mesurée. En ce qui concerne le biais, il est possible d'effectuer des recalages en exposant le dispositif à un rayonnement considéré comme nul. Mais cela suppose une opération de recalage spécifique, en dehors d'une utilisation normale du dispositif.

L'invention décrite ci-après permet d'effectuer un suivi du biais affectant des pixels d'un détecteur pixelisé. Un tel suivi permet de mieux contrôler la dérive du biais dans le temps. Il en résulte une meilleure précision dans l'estimation de l'énergie. Un avantage de l'invention est qu'elle ne nécessite pas une interruption du fonctionnement du dispositif.

## EXPOSE DE L'INVENTION

Un objet de l'invention est un procédé de détermination d'un biais affectant au moins un pixel d'un détecteur de rayonnement ionisant selon la revendication 1, le détecteur comportant plusieurs pixels, chaque pixel étant configuré pour collecter des porteurs de charges générés par une interaction du rayonnement ionisant dans le détecteur, et pour former une impulsion sous l'effet de la génération et de la collecte des porteurs de charges, les pixels étant répartis selon une matrice, le procédé comportant:

　　a) suite à la survenue d'une interaction dans le détecteur, à un instant de détection, détermination d'au moins un pixel formant une impulsion dépassant un seuil d'amplitude préalablement déterminé, durant un intervalle temporel de détection établi à partir de l'instant de détection;
　　b) parmi chaque pixel déterminé lors de l'étape a), sélection du pixel générant une amplitude maximale durant l'intervalle temporel de détection, le pixel sélectionné étant un pixel d'intérêt ;
　　c) sélection d'au moins un pixel éloigné, la position du pixel éloigné, par rapport au pixel d'intérêt, étant préalablement déterminée, de telle sorte que l'effet de l'interaction, détectée par le pixel d'intérêt, sur le pixel éloigné, est considéré comme négligeable
　　d) mesure d'une amplitude d'un signal généré par chaque pixel éloigné dans l'intervalle temporel de détection ;

e) à partir de chaque mesure effectuée lors de l'étape d), détermination d'un biais à l'instant de détection pour chaque pixel éloigné ;

f) mise à jour d'un biais affectant chaque pixel éloigné en fonction du biais déterminé à l'instant de détection.

Les étapes a) et f) peuvent être répétées à chaque fois qu'une interaction survient dans le détecteur, entraînant, lors de l'étape a), un dépassement d'un seuil d'amplitude d'au moins un pixel.

Selon un mode de réalisation, l'étape a) comporte :

- détermination d'un instant de détection, auquel un premier pixel forme une première impulsion franchissant le seuil d'amplitude ;
- définition de l'intervalle temporel de détection, s'étendant à partir de l'instant de détection, la durée de l'intervalle temporel de détection étant prédéterminée ;
- détermination, au cours de l'intervalle temporel de détection, des pixels formant une impulsion franchissant le seuil d'amplitude.

L'intervalle temporel de détection peut comporter des instants antérieurs à l'instant de détection. Il s'étend alors de part et d'autre de l'instant de détection.

Selon un mode de réalisation, l'étape b) comporte une sélection de plusieurs pixels éloignés, la position de chaque pixel éloigné par rapport au pixel d'intérêt étant préalablement déterminée. A chaque pixel est associé une ou plusieurs positions, de telle sorte que lorsque le pixel est un pixel d'intérêt, chaque position associée correspond à un pixel éloigné. Deux pixels différents sont de préférence associés à au moins deux positions différentes.

La position de chaque pixel éloigné, sur la matrice de pixels, peut changer en fonction de la position du pixel d'intérêt, sur la matrice de pixels.

Selon un mode de réalisation, lors de l'étape f) :

- préalablement à l'instant de détection, chaque pixel est affecté d'un biais courant ;
- suite à la détection de l'interaction, le biais est mis à jour, pour chaque pixel éloigné, en fonction du biais courant et du biais déterminé à l'instant de détection.

Le biais courant peut être initialisé à une valeur prédéterminée, par exemple nulle. La mise à jour du biais peut être effectuée par une somme pondérée du biais courant et du biais à l'instant de détection. Selon une possibilité, le biais d'un pixel éloigné, à l'instant de détection, est affecté d'un facteur de pondération variable en fonction d'un nombre de mises à jour du biais effectuées pour le pixel éloigné, depuis une initialisation, de telle sorte que plus le nombre de mises à jour du biais effectuées est faible, depuis l'initialisation, plus la contribution du biais mesuré à l'instant de mesure est élevée. Autrement dit, plus le nombre de mises à jour du biais est faible, plus le facteur de pondération est élevé.

Chaque facteur de pondération peut être initialisé, notamment lors d'une mise en route du détecteur, à une valeur identique pour l'ensemble des pixels.

Selon un mode de réalisation, le procédé comporte, suite à l'étape b) :

- une sélection d'au moins un pixel adjacent du pixel d'intérêt ;
- une mesure de l'amplitude de l'impulsion générée par le pixel d'intérêt et de l'impulsion générée par chaque pixel adjacent ;
- une estimation d'une énergie libérée au cours de l'interaction en fonction des amplitudes mesurées au niveau du pixel d'intérêt et par chaque pixel adjacent.

Les pixels adjacents sélectionnés peuvent être les pixels adjacents du pixel d'intérêt selon deux directions orthogonales.

Selon un mode de réalisation, chaque pixel comporte un détecteur de crête, de telle sorte qu'une interaction est considérée comme détectée lorsqu'une amplitude d'une impulsion, résultant de la collection de charges par le pixel, dépasse le seuil d'amplitude prédéterminé. Le procédé comporte alors une réinitialisation périodique de chaque détecteur de crête.

Entre deux réinitialisations successives d'un détecteur de crête, le procédé peut comporter une estimation d'un signal de dérive s'ajoutant au signal résultant de la collection de charges par le pixel. Le procédé peut alors être tel que lors de l'étape e), le signal de dérive estimé à l'instant de détection est soustrait du biais.

Un deuxième objet de l'invention est un procédé d'estimation d'une énergie correspondant à des porteurs de charges collectés par un pixel d'un détecteur pixelisé d'un rayonnement ionisant selon la revendication 11, chaque pixel étant configuré pour collecter des porteurs de charges générés par une interaction du rayonnement ionisant dans le détecteur, et pour former une impulsion sous l'effet de la collecte des porteurs de charges, les pixels étant répartis selon une matrice, le procédé comportant, lorsque l'amplitude d'une impulsion formée par le pixel, suite à une collecte de porteurs de charges, dépasse un seuil prédéterminé :

- détermination de l'amplitude de l'impulsion ;
- application d'une fonction de quantification d'énergie à l'amplitude déterminée ;

le procédé étant caractérisé en ce que la fonction de quantification d'énergie est paramétrée par un biais, le biais étant estimé par un procédé selon le premier objet de l'invention.

Le pixel peut être le pixel d'intérêt ou un pixel adjacent du pixel d'intérêt, tels que définis en lien avec le premier objet de l'invention.

Un troisième objet de l'invention est un dispositif de détection d'un rayonnement ionisant selon la revendication 12, comportant différents pixels d'un détecteur pixelisé, chaque pixel étant configuré pour collecter des porteurs de charges générés par une interaction du rayonnement ionisant dans le détecteur, et pour former une impulsion sous l'effet de la collecte des porteurs de charges, le dispositif comportant un microprocesseur configuré pour mettre en oeuvre les étapes b) à f) d'un procédé selon le premier objet de l'invention à partir de chaque impulsion formée par au moins un pixel. L'invention sera mieux comprise à la lecture de l'exposé des exemples de réalisation présentés, dans la suite de la description, en lien avec les figures listées ci-dessous.

## FIGURES

La figure 1A schématise les principaux composants d'un détecteur de rayonnement ionisant.
La figure 1B schématise une matrice de pixels.
La figure 2A montre une impulsion formée par un premier pixel, à un instant de détection, entraînant un déclenchement d'un comparateur à seuil et la prise en compte d'un intervalle temporel de détection s'étendant à partir de l'instant de détection.
La figure 2B montre une impulsion formée par un pixel d'intérêt durant l'intervalle temporel de détection.
La figure 3 montre les principales étapes d'un procédé selon l'invention.
Les figures 4A et 4B schématisent deux positions différentes d'un pixel d'intérêt.

## EXPOSE DE MODES DE REALISATION PARTICULIERS

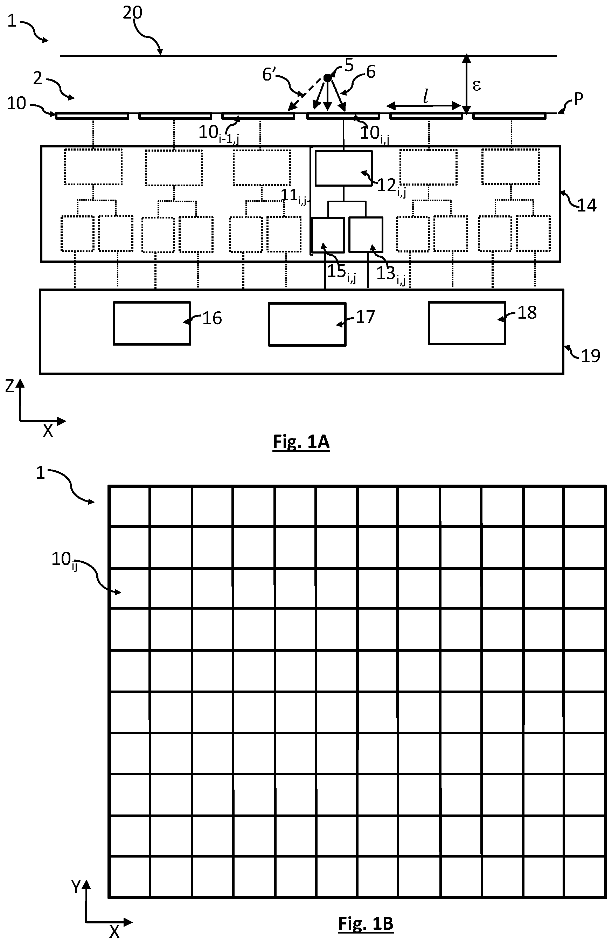

On a représenté, sur les figures 1A et 1B, un détecteur de rayonnement pixellisé 1, configuré pour interagir avec un rayonnement ionisant 5. Par rayonnement ionisant, on entend un rayonnement formé de particules aptes à ioniser la matière. Il peut s'agir d'un rayonnement alpha, d'un rayonnement beta, d'un rayonnement photonique de type X ou gamma, ou encore un rayonnement neutronique. Dans l'exemple représenté, le rayonnement est un rayonnement photonique de type gamma, formé de photons dont l'énergie est par exemple comprise entre 1 keV et 2 MeV. L'invention est particulièrement appropriée à une exposition du détecteur de rayonnement à des sources isotopiques émettrices gamma.

Dans l'exemple représenté, le détecteur comporte un matériau détecteur semi-conducteur 2, de type CdTe, mais il pourrait également s'agir d'un matériau semi-conducteur communément mis en oeuvre pour la détection de rayonnements ionisants, par exemple de type Ge, Si, CdZnTe. Le matériau semi-conducteur est polarisé par un champ électrique E, se formant entre une anode 10 et une cathode 20. Lorsqu'une particule, en l'occurrence un photon, du rayonnement ionisant 5 interagit dans le détecteur 1, des porteurs de charges 6 se forment et migrent vers une électrode de collecte 10 segmentée en pixels $10_{i,j}$. Dans l'exemple représenté, l'électode de collecte est une anode. La quantité de charges $Q$ collectée par un pixel $10_{i,j}$ dépend, de préférence linéairement, de l'énergie $E$ libérée par la particule sous l'effet de l'interaction.

Le détecteur de rayonnement 1 comporte ainsi plusieurs pixels $10_{i,j}$ agencés selon un plan, dit plan de détection P, comme représenté sur la figure 1B. Les indices i et j désignent les coordonnées de chaque pixel dans le plan de détection. Les pixels s'étendent selon une matrice bidimensionnelle, de préférence régulière. Dans les exemples décrits dans cette demande, le plan de détection P est défini par deux axes perpendiculaires X et Y. Chaque pixel est par exemple un carré de côté $l$, $l$ variant par exemple entre 500 $\mu$m et 1 cm. Perpendiculairement aux axes X et Y, le matériau détecteur 2 s'étend selon une épaisseur $\varepsilon$, parallèlement à un axe Z. L'épaisseur $\varepsilon$ est par exemple comprise entre 500 $\mu$m et 5 mm. Le nombre de pixels peut être de plusieurs dizaines, voire centaines, selon l'axe X et l'axe Y. Par exemple, les pixels peuvent être regroupés par sous-ensembles de 256 pixels (16 x 16 pixels), les sous-ensembles étant aboutés les uns aux autres de façon à former le détecteur 1.

D'autres types de détecteurs, par exemple des matériaux scintillateurs couplés à un convertisseur photons/porteurs de charge sont utilisables, dès lors qu'ils permettent la collecte d'une quantité de charges Q sous l'effet d'une énergie E libérée par le rayonnement ionisant au cours d'une interaction dans le matériau détecteur. Il peut notamment s'agir de détecteurs basés sur un assemblage scintillateurs-tubes photomultiplicateurs ou scintillateurs-photodiodes.

Chaque pixel $10_{i,j}$ comporte un circuit électronique de traitement $11_{i,j}$, comportant :

- un circuit $12_{i,j}$ de formation d'une impulsion en tension sous l'effet de la collecte de porteurs de charges. Il s'agit d'un circuit connu de l'homme du métier, permettant une conversion courant-tension. Il comporte un préamplificateur, un amplificateur et un circuit de mise en forme, ce dernier étant usuellement désigné par le terme "shaper".
- un comparateur à seuil $13_{i,j}$, adressant un signal de déclenchement lorsque l'amplitude d'une impulsion résultant du circuit $12_{i,j}$ franchit un seuil d'amplitude prédéterminé.
- un détecteur de crête $15_{i,j}$, permettant une mémorisation temporaire d'une valeur maximale du signal résultant de chaque circuit de formation d'impulsion

$12_{i,j}$. Il peut s'agir d'une mémoire permettant de mémoriser une valeur maximale signal issu du circuit $12_{i,j}$, selon une durée prédéterminée, par exemple de 15 µs.

Chaque détecteur de crête $15_{i,j}$ peut être réinitialisé à intervalles de temps régulier, comme décrit par la suite. Chaque détecteur de crête peut également être réinitialisé à l'issue d'un intervalle temporel de détection dt défini suite au déclenchement d'un comparateur à seuil $13_{i,j}$. L'intervalle de détection est défini par la suite. Chaque détecteur de crête $15_{i,j}$ est disposé en parallèle d'un comparateur à seuil $13_{i,j}$.

Dans cet exemple, les différents circuits de traitement $11_{i,j}$ respectivement associés à différents pixels $10_{i,j}$ sont formés dans un circuit intégré 14. Le circuit intégré peut prendre la forme d'un ASIC (Application Spécifie Integrated Circuit).

L'indice i,j signifie qu'on dispose, dans cet exemple, d'un circuit de traitement par pixel. De façon alternative, un même circuit de traitement est commun à plusieurs pixels, le traitement des signaux reçus de chaque pixel étant multiplexé.

Le circuit électronique de traitement $11_{i,j}$ peut comporter un convertisseur analogique numérique de façon que l'ASIC traite des signaux numériques. Le convertisseur analogique peut être disposé à la sortie du circuit intégré 14.

Le circuit intégré 14 est relié à une unité de traitement aval 19, cette dernière étant configurée pour effectuer les opérations suivantes :

- sous l'effet d'un déclenchement d'un comparateur à seuil $13_{i,j}$ survenant à un instant de détection t, prise en compte d'un intervalle temporel de détection dt;
- durant l'intervalle temporel de détection dt, identification de pixels formant une impulsion dont l'amplitude dépasse le seuil d'amplitude ;
- sélection, parmi les pixels identifiés, d'un pixel d'intérêt $10_{int}$, qui est le pixel formant une impulsion dont l'amplitude est maximale parmi les impulsions ayant dépassé le seuil d'amplitude.

Dans cet exemple, l'unité de traitement 19 comporte des composants numériques, prenant la forme d'un FPGA (Field Programmated Gate Array - circuit intégré composé d'un réseau de cellules programmables).

- un module 16 de détermination d'un biais correspondant à chaque pixel. L'unité de traitement 19 peut adresser quelques dizaines voire quelques centaines de pixels, par exemple 256 pixels.
- une mémoire 17, pour stocker les valeurs des biais respectivement déterminés pour chaque pixel ;
- un module 18 de quantification de l'énergie à partir de l'amplitude résultant du circuit de traitement $11_{i,j}$, en mettant en oeuvre une fonction de calibration g, cette dernière étant notamment paramétrée par le biais mémorisé pour chaque pixel.

L'unité de traitement 19 peut également traiter des données numériques de manière logicielle. Dans un tel cas, les modules 16 et 18 listés ci-dessus peuvent prendre la forme de fonctions codées dans une mémoire, mises en oeuvre par un microprocesseur.

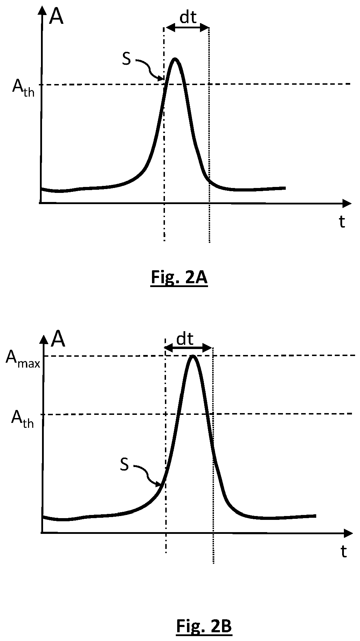

La figure 2A schématise une impulsion formée par un premier pixel, c'est-à-dire un pixel formant une impulsion dont l'amplitude dépasse le seuil prédéterminé $A_{th}$. L'instant où l'amplitude dépasse le seuil est un instant de détection t. Un intervalle temporel de détection dt est défini par rapport à l'instant de détection t. L'intervalle temporel de détection dt a une durée prédéterminée, par exemple 5 µs. Il s'étend à partir de l'instant de détection t. Il peut également s'étendre de part et d'autre de l'instant de détection t, par exemple entre t - 2 µs et t + 3 µs. Comme précédemment indiqué, au cours de l'intervalle temporel de détection dt, l'ASIC 14 identifie des pixels ayant formé des impulsions dont l'amplitude dépasse le seuil d'amplitude $A_{th}$. Parmi ces derniers, l'unité de traitement 19 sélectionne le pixel d'intérêt $10_{int}$, c'est-à-dire le pixel formant l'amplitude maximale $A_{max}$ au cours d'intervalle temporel de détection.

La figure 2B schématise une impulsion formée par le pixel d'intérêt. Son amplitude $A_{max}$ est maximale parmi les amplitudes des impulsions formées par d'autres pixels, au cours de l'intervalle temporel de détection dt.

Comme décrit en lien avec l'art antérieur, à partir de l'amplitude A de l'impulsion formée par chaque pixel, il est possible d'estimer une énergie libérée par l'interaction du photon dans le détecteur. Pour cela, on applique une fonction de quantification g permettant de quantifier l'énergie à partir de l'amplitude. Il peut s'agir d'une relation linéaire, prenant par exemple la forme d'une fonction de quantification g affine telle que :

$$E = g_{\alpha,\beta}(A) = \alpha A - \beta \ (1)$$

La notation $g_{\alpha,\beta}$ signifie que la fonction g est paramétrée par le gain $\alpha$ et le biais $\beta$.

Lorsque l'ensemble des porteurs de charges sont collectés par un seul pixel, l'énergie E correspond à l'énergie libérée dans le détecteur par l'interaction du photon.

Comme mentionné dans l'art antérieur, les coefficients $\alpha$ et $\beta$ sont des réels positifs. $\alpha$ est un gain, et $\beta$ est un biais.

Les coefficients $\alpha$ et $\beta$ sont variables d'un pixel à un autre. Dans la suite de la description, $\alpha_{i,j}$ et $\beta_{i,j}$ sont les gains et les biais respectivement associés à chaque pixel $10_{i,j}$. Les coefficients $\alpha_{i,j}$ et $\beta_{i,j}$ sont les paramètres de la fonction de quantification g définie pour chaque pixel. Leur détermination permet d'affiner l'estimation de l'énergie transportée par les porteurs de charge collectés par le pixel à partir de l'amplitude A d'une impulsion S formée par le circuit électronique $11_{i,j}$ de chaque pixel $10_{i,j}$. Il importe donc que les coefficients $\alpha_{i,j}$ et $\beta_{i,j}$ soient déterminés avec précision. Les coefficients $\alpha_{i,j}$ et $\beta_{i,j}$ peuvent être déterminés par un étalonnage en énergie, au cours duquel chaque pixel est exposé à un rayonnement dont le spectre en énergie présente des singularités, comme précédemment évoqué. Un tel étalonnage peut être effectué préalablement à la mise en oeuvre du détecteur. Cependant, au cours de l'utilisation du détecteur, le biais $\beta_{i,j}$ peut varier. Il en résulte une erreur dans la quantification de l'énergie à partir de l'amplitude de l'impulsion S formée par le circuit électronique $11_{i,j}$ associé au pixel.

Il est donc important d'estimer, avec la meilleure précision possible, et le plus régulièrement possible, le biais $\beta_{i,j}$ associé à chaque pixel. Comme précédemment indiqué, pour un même pixel, le biais $\beta_{i,j}$ peut varier de façon aléatoire en fonction du temps. Il est donc important qu'il soit mis à jour régulièrement.

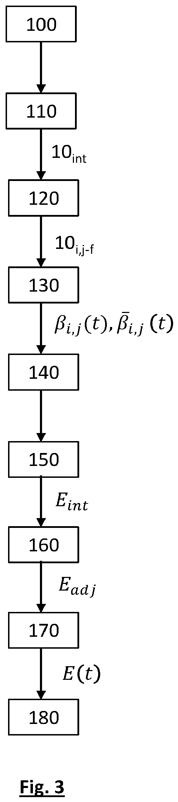

On va à présent décrire un procédé d'estimation du biais $\beta_{i,j}$ des pixels $10_{i,j}$ du détecteur, dont les étapes sont schématisées sur la figure 3A. Généralement, préalablement à l'utilisation du détecteur 1, le gain $\alpha_{i,j}$ et le biais $\beta_{i,j}$ ont déjà été déterminés. Ainsi, le biais $\beta_{i,j}$ de chaque pixel $10_{i,j}$ est initialisé à une valeur initiale.

Etape 100 : Détection d'une interaction

Lors de la survenue d'une interaction dans le matériau détecteur 2, libérant une énergie suffisante, un premier pixel $10_{i,j}$ collecte une charge Q significative. Suite à la collecte de cette charge, le circuit électronique de traitement $11_{i,j}$ associé au pixel forme une impulsion S dont l'amplitude engendre un déclenchement du comparateur à seuil. Dans ce cas, une interaction est considérée comme détectée, à un instant de détection t. Comme précédemment décrit, un intervalle temporel de détection dt est défini, s'étendant à partir de l'instant d'interaction t. L'intervalle temporel de détection dt peut s'étendre de part et d'autre de l'instant d'interaction t. La durée de l'intervalle temporel de détection dt est prédéterminée.

Etape 110 : Sélection du pixel d'intérêt.

Au cours de l'intervalle temporel de détection dt, on identifie les pixels ayant formé une impulsion dépassant le seuil d'amplitude $A_{th}$. L'unité de traitement 19 sélectionne le pixel, dit pixel d'intérêt $10_{int}$, ayant formé l'impulsion dont l'amplitude $A_{max}$ est maximale. Il s'agit du pixel considéré comme étant, parallèlement au plan de détection P, le plus proche du lieu de l'interaction.

Cette étape est mise en oeuvre en utilisant l'unité de traitement aval 19, cette dernière stockant temporairement les signaux résultant de chaque pixel.

A l'issue de l'étape 120, on dispose des coordonnées $(i_{int}, j_{int})$ du pixel d'intérêt $10_{int}$.

Etape 120 : Sélection d'un pixel éloigné ou de plusieurs pixels éloignés.

Au cours de cette étape, réalisée par le module 16 de détermination de biais, on sélectionne au moins un pixel éloigné $10_{i,j^-f}$ du pixel d'intérêt $10_{int}$. Par pixel éloigné $10_{i,j^-f}$, on entend un pixel dont on considère qu'il est suffisamment éloigné pour qu'on considère qu'il n'a pas collecté de charge, ou de façon négligeable, suite à l'interaction survenue à l'instant de détection t. La position relative de chaque pixel éloigné $10_f$ par rapport au pixel d'intérêt $10_{int}$ est préalablement déterminée. Ainsi, lorsqu'un pixel d'intérêt $10_{int}$ a été localisé, la position de chaque pixel éloigné $10_f$ est effectuée automatiquement, sur la base de la position relative prédéterminée.

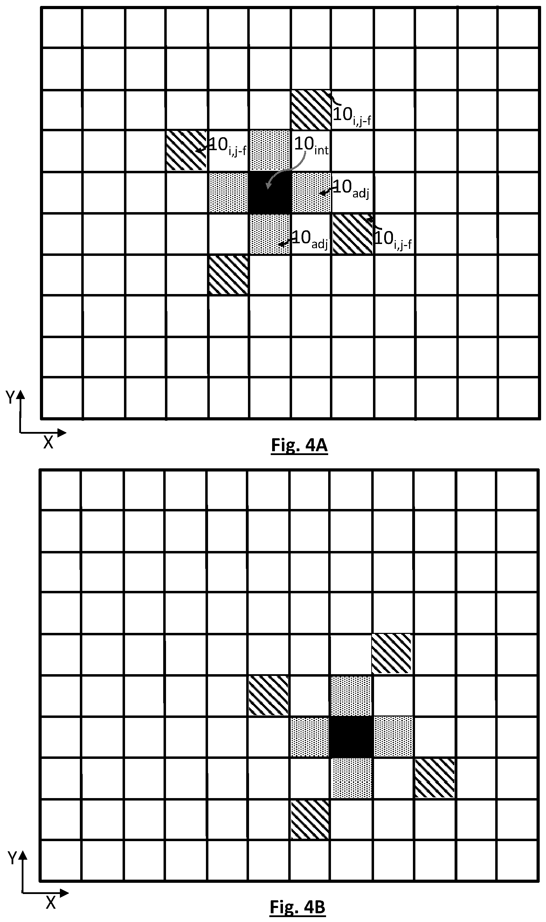

Les figures 4A et 4B illustrent un exemple selon lequel quatre pixels éloignés $10_{i,j^-f}$ sont simultanément sélectionnés suite à l'identification d'un pixel d'intérêt $10_{int}$. Sur les figures 4A et 4B, le pixel d'intérêt $10_{int}$ est différent. Il est représenté par un carré noir. Les pixels éloignés sont hachurés. Sur les exemples représentés sur les figures 4A et 4B, si $(i_{int}, j_{int})$ correspond à la coordonnée du pixel d'intérêt $10_{int}$, Les pixels éloignés $10_{j,j^-f}$ sont localisés selon les coordonnées $(i_{int}-2, j_{int}+1)$, $(i_{int}-1, j_{int}-2)$, $(i_{int}+2, j_{int}-1)$, $(i_{int}+1, j_{int}+2)$. Ainsi, selon cet exemple, la norme d'ordre 1 d'un vecteur, formé par les coordonnées $(i_{int}, j_{int})$ du pixel d'intérêt $10_{int}$ et les coordonnées de chaque pixel éloigné $10_{j,j^-f}$, est égale à 3. Dans la notation $10_{j,j^-f}$, l'indice i,j-f signifie qu'il s'agit d'un pixel éloigné de coordonnées (i,j).

Un aspect important de l'invention est que la position relative de chaque pixel éloigné $10_{j,j-f}$ par rapport au pixel d'intérêt $10_{int}$ est prédéterminée. Elle dépend notamment de la taille $l$ des pixels et de l'épaisseur du matériau détecteur 2.

Le nombre de pixels éloignés $10_{i,j^-f}$ ne doit pas être trop élevé, de façon à économiser le temps de traitement suivant la détection de chaque impulsion. Il doit cependant être suffisant, de façon à pouvoir caractériser le biais $\beta_{i,j}$ de façon satisfaisante. Ainsi, le nombre de pixels éloignés pris en compte à chaque détection est de préférence compris entre 1 et 20, et encore de préférence entre 2 et 10. Ainsi, lors de chaque détection d'une interaction, une faible partie des pixels de la matrice sont considérés comme des pixels éloignés et font ainsi l'objet d'une mise à jour de leur biais. On considère qu'au bout d'un certain nombre d'interactions, le biais de l'ensemble des pixels de la matrice est progressivement mis à jour.

Le fait que la position relative de chaque pixel éloigné $10_{j,j^-f}$, par rapport au pixel d'intérêt $10_{int}$, soit prédéterminée permet d'adresser successivement différentes localisations de pixels éloignés. En effet, à chaque instant de détection, le pixel d'intérêt $10_{int}$ peut varier, ce qui entraîne une variation de la position des pixels éloignés $10_{i,j^-f}$. Lors de chaque interaction, la probabilité qu'un pixel de la matrice soit un pixel d'intérêt peut être considérée comme égale pour l'ensemble des pixels de la matrice. Selon une telle hypothèse, le procédé permet une mise à jour régulière du biais de l'ensemble des pixels de la matrice.

Suite à l'étape 120, on dispose des coordonnées de chaque pixel éloigné $10_{i,j\text{-}f}$.

Etape 130 Détermination du biais.

Pour chaque pixel éloigné $10_{i,j\text{-}f}$ identifié au cours de l'étape 120, le module de détermination du biais 16, met à jour une valeur de biais $\beta_{i,j}(t)$ en fonction de l'amplitude maximale $A_{i,j\text{-}f}(t)$ du signal $S_{i,j\text{-}f}$ issu du pixel durant l'intervalle temporel de détection dt. Selon une première approche, on peut estimer que :

$$\beta_{i,j}(t) = A_{i,j-f}(t) \quad (2)$$

Cela revient à considérer que l'amplitude du signal $S_{i,j\text{-}f}$ résultant du circuit de détection $11_{i,j}$, d'un pixel $10_{j,j\text{-}f}$ n'ayant collecté aucune charge correspond au biais du pixel.

Avant la mise en route du détecteur, la valeur de biais de chaque pixel $10_{i,j}$ est initialisée à une valeur initiale $\beta_{init\text{-}i,j}$. Il peut s'agir d'une valeur arbitraire, par exemple déterminée au cours d'un étalonnage en énergie, ou une valeur nulle, ou une valeur issue d'une utilisation précédente du détecteur.

Après qu'un pixel $10_{i,j}$, de coordonnée (i,j) a été sélectionné en tant que pixel éloigné, la valeur de biais qui lui est associée est mise à jour, en fonction de l'amplitude $A_{i,j\text{-}f}(t)$ du signal $S_{i,j\text{-}f}$ détecté. Comme précédemment indiqué, une première option est de remplacer la valeur de biais $\beta_{i,j}$, correspondant à ce pixel, par la valeur $A_{i,j\text{-}f}(t)$ détectée à l'instant de détection. Cependant, l'inventeur a considéré qu'il était préférable que la mise à jour de la valeur de biais soit plus progressive, en prenant en compte une valeur courante du biais $\beta_{i,j}(t^-)$, c'est-à-dire à un instant précédent l'instant de détection. La notation $t^-$ correspond à un instant antérieur à l'instant de détection t, et par exemple l'instant immédiatement antérieur à l'instant de détection t. La mise à jour peut être effectuée par une somme pondérée de la valeur courante $\beta_{i,j}(t^-)$ avec $A_{f\text{-}i,j}(t)$.

La mise à jour peut être effectuée selon l'expression suivante :

$$\bar{\beta}_{i,j}(t) = (1 - k_{i,j})\beta_{i,j}(t^-) + k_{i,j}\beta_{i,j}(t) \quad (3)$$

où :

- 

$$\beta_{i,j}(t) = A_{i,j-f}(t) \quad (2)$$

- $k_{i,j}$ est un coefficient de lissage. Il s'agit d'un réel strictement compris entre 0 et 1.

La valeur $\overline{\beta_{i,j}}(t)$ correspond à la valeur du biais après la mise à jour. Cette valeur est mémorisée dans la mémoire 17.

Le coefficient de lissage $k_{i,j}$ permet de moduler la prise en compte de la valeur du biais établie à l'instant de détection t par rapport à la valeur courante du biais. Par exemple, $k_{i,j} = 2^{-8}$

Selon un mode de réalisation, la valeur du coefficient de lissage $k_{i,j}$ peut varier avec le temps, et la position du pixel, en fonction du nombre de mises à jour du biais effectuées. Si $n_{i,j}(t)$ désigne le nombre de mises à jour du biais d'un pixel $10_{i,j}$ préalablement à un instant de détection t, le coefficient de lissage $k_{i,j}$ appliqué au pixel $10_{i,j}$ est tel que :

$$k_{i,j} = 2^{-\min(8\,;\,log_2(n_{i,j}(t)))} \quad (4)$$

Où $log_2$ est le logarithme en base 2.

$n_{i,j}(t)$ peut par exemple correspondre au nombre de mises à jour du biais d'un pixel $10_{i,j}$ effectuées depuis l'initialisation du biais.

Selon ce mode de réalisation, le coefficient de lissage est égale à $2^{-8}$ lorsqu'au moins 256 mises à jour ont été effectuées. Cela correspond à un nombre d'occurrences égal à 256, dans lesquelles le pixel $10_{i,j}$ considéré a été considéré comme pixel éloigné. Un tel mode de réalisation revient à surpondérer les premières mises à jour effectuées après l'initialisation, jusqu'à ce que leur nombre atteigne 256.

Suite à l'étape 130, les biais respectifs de chaque pixel éloigné sont mis-à-jour selon l'expression (2), avec une prise en compte éventuelle de l'expression (3). Ils sont stockés dans une mémoire respectivement rattachée à chaque pixel considéré.

Etape 140 : Mémorisation du biais.

Au cours de l'étape 140, les différents biais mis à jour au cours de l'étape 130 sont mémorisés pour chaque pixel, dans la mémoire 17.

Etape 150 : Quantification de l'énergie collectée par le pixel d'intérêt.

Au cours de l'étape 150, on applique la fonction de quantification $g_{i,j}$ établie pour le pixel d'intérêt $10_{int}$ de façon à estimer l'énergie $E_{int}$ correspondant à l'impulsion collectée par ce pixel.

Ainsi,

$$E_{int} = g_{\alpha_{int},\beta_{int}}(A) = \alpha_{int}A - \beta_{int} \quad (5)$$

où $a_{int}$ et $\beta_{int}$ correspondent respectivement au gain et au biais correspondant au pixel d'intérêt $10_{int}$.

L'étape 150 est mise en oeuvre par le module de quantification d'énergie 18.

Etape 160 : Prise en compte des pixels adjacents.

Suite à une interaction, certains porteurs de charge 6' peuvent atteindre des pixels adjacents $10_{adj}$ du pixel d'intérêt $10_{int}$. Dans ce cas, le procédé comporte une prise en compte du signal $S_{iadj,jadj}$ formé par chaque pixel adjacent $10_{adj}$, et dépassant le seuil d'amplitude $A_{th}$ durant l'intervalle de détection dt.

Ainsi,

$$E_{adj} = g_{\alpha_{adj},\beta_{adj}}(A) = \alpha_{adj}A - \beta_{adj} \quad (6)$$

où $\alpha_{adj}$ et $\beta_{adj}$ correspondent respectivement au gain et au biais correspondant à chaque pixel adjacent $10_{adj}$.

Dans les exemples représentés sur les figures 4A et 4B, on a pris en compte les 4 pixels adjacents $10_{adj}$ les plus proches du pixel d'intérêt $10_{int}$. Les pixels adjacents $10_{adj}$ sont représentés par une texture formée de petits points sur les figures 4A et 4B. L'étape 160 est effectuée pour chaque pixel adjacent considéré.

L'étape 160 est optionnelle. Elle est mise en oeuvre, par le module de quantification d'énergie 18, lorsque la taille des pixels est telle qu'une part non négligeable des porteurs de charges est susceptible d'être collectée par au moins un pixel adjacent.

Etape 170 : estimation de l'énergie libérée par le photon.

L'amplitude de l'énergie libérée dans le détecteur par le photon gamma incident peut être estimée à partir de l'énergie collectée par le pixel d'intérêt et les éventuelles énergies collectées par chaque pixel adjacent. Généralement, il est considéré que l'énergie libérée E(t) à l'instant de détection correspond à la somme des énergies respectivement collectées par le pixel d'intérêt $10_{int}$ et chaque pixel adjacent $10_{adj}$ produisant une impulsion S dont l'amplitude dépasse le seuil d'amplitude $A_{th}$.

Etape 180 : localisation de l'interaction

De façon optionnelle, le dispositif 1 peut être mis en oeuvre pour estimer une position de l'interaction dans le matériau détecteur, et en particulier dans un plan parallèle au plan de détection. Sans prise en compte des pixels adjacents, la position de l'interaction correspond à la position du pixel d'intérêt $10_{int}$. Lorsque les pixels adjacents sont pris en compte, selon l'étape 160, la position de l'interaction peut être affinée par un calcul, par exemple par un calcul barycentrique. Le calcul barycentrique consiste à pondérer les coordonnées de chaque pixel par l'énergie collectée par ce dernier. Il s'agit d'un procédé connu de l'homme du métier, permettant une estimation de la position de l'interaction selon une résolution inférieure à la taille de chaque pixel. Cette étape est effectuée par l'unité de traitement 19.

Les étapes 100 à 180 sont répétées à chaque nouvelle détection d'une interaction.

Réinitialisation des détecteurs de crête.

Selon un mode de réalisation, le dispositif est tel qu'une réinitialisation de chaque détecteur de crête $15_{i,j}$ respectivement associé à chaque pixel $10_{i,j}$, soit périodiquement effectuée. En effet, tant qu'un pixel ne collecte pas de porteurs de charges résultant d'une interaction, un potentiel de dérive $V_{drift}$ d'accumule progressivement, au niveau de chaque détecteur de crête $15_{i,j}$. Après une certaine durée, le potentiel de dérive $V_{drift}$ peut impacter significativement l'estimation du biais. Afin d'éviter une telle dérive, une remise à zéro de l'ensemble des détecteur de crête $15_{i,j}$ peut être commandée périodiquement. La période de réinitialisation peut par exemple être de 1 ms. Une telle réinitialisation permet de réinitialiser les détecteurs de crêtes $15_{i,j}$, de façon à éviter que le potentiel de dérive $V_{drift}$, au niveau de chaque détecteur de crête $15_{i,j}$ ne devienne excessif.

Variante

Entre deux réinitialisations successives d'un détecteur de crête $15_{i,j}$, il est préférable de tenir compte de l'existence du potentiel de dérive $V_{drift}$. Au cours d'une phase de calibration, en l'absence de rayonnement incident, l'évolution du potentiel de dérive $V_{drift}$ en fonction du temps peut être déterminée pour chaque pixel. On obtient ainsi, pour chaque pixel, une fonction temporelle de dérive $V_{drift}(t')$, où t' représente la durée écoulée depuis la précédente réinitialisation du détecteur de crête $15_{i,j}$ relié au pixel. Les fonctions temporelles de dérives de chaque pixel peuvent être moyennées, de façon à obtenir une fonction moyenne $\overline{V}_{drift}(t')$, qui est considérée comme pouvant s'appliquer à chaque pixel.

Lorsqu'on prend en compte une telle fonction, l'expression (2) est remplacée par :

$$\beta_{i,j}(t) = A_{i,j-f}(t) - \overline{V}_{drift}(t') \quad (2')$$

La prise en compte de la charge de dérive, dans l'estimation du biais, est optionnelle. Il est considéré qu'après numérisation, la charge de dérive $\overline{V}_{drift}$ correspond à 30 à 350 LSB (Least Significant Bit), tandis que le biais correspond à 3000 à 4000 LSB (Least Significant Bit).

Les avantages du procédé décrit ci-avant sont les suivants :

- une estimation du biais des pixels au cours de l'utilisation du détecteur. Cela est dû au fait qu'à chaque évènement, le procédé comporte une mise à jour du biais de pixels éloignés, donc considérés comme inutiles dans le traitement de l'évènement ;

- une répartition des pixels, pour lesquels le biais est mis à jour, évoluant en fonction de la position du pixel d'intérêt dans la matrice de pixels. Cela permet une mise à jour progressive de l'ensemble des pixels du détecteur.
- lors de chaque évènement, une mise à jour du biais d'un faible nombre de pixels, ce qui n'alourdit pas le procédé et reste compatible avec des cadences d'acquisition rapide.

Le procédé peut être mis en oeuvre de telle sorte que suite à la détection d'un évènement, et à la détermination du pixel d'intérêt, un masque de lecture est appliqué sur la matrice, de façon à identifier les pixels éloignés. Le masque de lecture est centré sur le pixel d'intérêt $10_{int}$ et définit les positions respectives des pixels éloignés $10_{i,j-f}$ et des éventuels pixels adjacents $10_{adj}$. Ainsi, le nombre de pixels lu à chaque évènement est compris entre 2 (le pixel d'intérêt et 1 seul pixel éloigné, pas de prise en compte d'un pixel adjacent) et 10, voire 15 (le pixel d'intérêt, 4 ou 6 pixels adjacents, les autres pixels étant des pixels éloignés). Lorsque le pixel d'intérêt est situé au niveau d'une bordure de la matrice, ou à proximité de la bordure, le nombre et la position des pixels éloignés, et des éventuels pixels adjacents, sont adaptés.

L'invention pourra être mise en oeuvre dans des applications de mesure pour localiser des sources radioactives, par exemple dans des installations nucléaires ou dans l'environnement.

## Revendications

1. Procédé de détermination d'un biais ($\beta_{i,j}$) affectant au moins un pixel d'un détecteur (1) de rayonnement ionisant, le détecteur comportant plusieurs pixels ($10_{i,j}$), chaque pixel étant configuré pour collecter des porteurs de charges (6) générés par une interaction (5) du rayonnement ionisant dans le détecteur, et pour former une impulsion (S) sous l'effet de la génération et de la collecte des porteurs de charges, les pixels étant répartis selon une matrice, le procédé comportant :

   a) suite à la survenue d'une interaction dans le détecteur, à un instant de détection (t), détermination d'au moins un pixel formant une impulsion dépassant un seuil d'amplitude ($A_{th}$) préalablement déterminé, durant un intervalle temporel de détection (dt) établi à partir de l'instant de détection (t);
   b) parmi chaque pixel déterminé lors de l'étape a), sélection du pixel générant une amplitude maximale ($A_{max}$) durant l'intervalle temporel de détection, le pixel sélectionné étant un pixel d'intérêt ($10_{int}$);
   c) sélection d'au moins un pixel éloigné ($10_{i,j-f}$), la position du pixel éloigné, par rapport au pixel d'intérêt ($10_{int}$), étant préalablement déterminée, de telle sorte que l'effet de l'interaction, détectée par le pixel d'intérêt, sur le pixel éloigné, est considéré comme négligeable ;
   d) mesure d'une amplitude d'un signal généré par chaque pixel éloigné dans l'intervalle temporel de détection;
   e) à partir de chaque mesure effectuée lors de l'étape d), détermination d'un biais ($\beta_{i,j}(t)$) à l'instant de détection pour chaque pixel éloigné ;
   f) mise à jour d'un biais ($\overline{\beta_{i,j}}(t), \beta_{i,j}(t)$) affectant chaque pixel éloigné en fonction du biais déterminé à l'instant de détection.

2. Procédé selon la revendication 1, dans lequel l'étape a) comporte :

   - détermination d'un instant de détection, auquel un premier pixel forme une première impulsion franchissant le seuil d'amplitude ($A_{th}$);
   - définition de l'intervalle temporel de détection (dt), s'étendant à partir de l'instant de détection (t), la durée de l'intervalle temporel de détection étant prédéterminée ;
   - détermination, au cours de l'intervalle temporel de détection, des pixels formant une impulsion franchissant le seuil d'amplitude.

3. Procédé selon l'une quelconque des revendications précédentes, dans lequel l'étape b) comporte une sélection de plusieurs pixels éloignés ($10_{i,j-f}$), la position de chaque pixel éloigné par rapport au pixel d'intérêt étant préalablement déterminée.

4. Procédé selon l'une quelconque des revendications précédentes, dans lequel la position de chaque pixel éloigné, sur la matrice de pixels, change en fonction de la position du pixel d'intérêt, sur la matrice de pixels.

5. Procédé selon l'une quelconque des revendications précédentes, dans lequel lors de l'étape f):

   - préalablement à l'instant de détection, chaque pixel est affecté d'un biais courant ($\beta_{i,j}(t^-)$);
   - suite à la détection de l'interaction, le biais est mis à jour, pour chaque pixel éloigné, en fonction du biais courant ($\beta_{i,j}(t-)$) et du biais déterminé à l'instant de détection ($\beta_{i,j}(t)$).

6. Procédé selon la revendication 5, dans lequel la mise à jour du biais est effectuée par une somme pondérée du biais courant ($\beta_{i,j}(t-)$) et du biais à l'instant de détection ($\beta_{i,j}(t)$).

**7.** Procédé selon la revendication 6, dans lequel le biais ($\beta_{i,j}$(t)) d'un pixel éloigné $10_{i,j-f}$), à l'instant de détection, est affecté d'un facteur de pondération ($k_{i,j}$) variable en fonction d'un nombre de mises à jour du biais ($n_{i,j}$) effectuées pour le pixel éloigné depuis une initialisation, de telle sorte que plus le nombre de mises à jour du biais effectuées, depuis l'initialisation, est faible, plus la contribution du biais mesuré à l'instant de mesure est élevée.

**8.** Procédé selon l'une quelconque des revendications précédentes, comportant, suite à l'étape b) :

- une sélection d'au moins un pixel adjacent ($10_{adj}$) du pixel d'intérêt ;
- une mesure de l'amplitude de l'impulsion générée par le pixel d'intérêt et de l'impulsion générée par chaque pixel adjacent ;
- une estimation d'une énergie libérée au cours de l'interaction en fonction des amplitudes mesurées au niveau du pixel d'intérêt et par chaque pixel adjacent.

**9.** Procédé selon l'une quelconque des revendications précédentes, dans lequel chaque pixel comporte un détecteur de crête ($15_{i,j}$), de telle sorte qu'une interaction est considérée comme détectée lorsqu'une amplitude d'une impulsion (S), résultant de la collection de charges par le pixel, dépasse le seuil d'amplitude prédéterminé ($A_{th}$), le procédé comportant une réinitialisation périodique de chaque détecteur de crête.

**10.** Procédé selon la revendication 9, comportant, entre deux réinitialisations successives d'un détecteur de crête ($15_{i,j}$), une estimation d'un signal de dérive ($V_{drift}$(t'), $\overline{V}_{drift}$(t')) s'ajoutant au signal résultant de la collection de charges par le pixel, le procédé étant tel que lors de l'étape e), le signal de dérive estimé à l'instant de détection ($V_{drift}$(t'), $\overline{V}_{drift}$(t')) est soustrait du biais ($\beta_{i,j}$(t)).

**11.** Procédé d'estimation d'une énergie correspondant à des porteurs de charges (6) collectés par un pixel ($10_{i,j}$) d'un détecteur pixelisé (1) d'un rayonnement ionisant, chaque pixel étant configuré pour collecter des porteurs de charges générés par une interaction (5) du rayonnement ionisant dans le détecteur, et pour former une impulsion (S) sous l'effet de la collecte des porteurs de charges, les pixels étant répartis selon une matrice, le procédé comportant, lorsque l'amplitude d'une impulsion formée par le pixel, suite à une collecte de porteurs de charges, dépasse un seuil prédéterminé ($A_{th}$):

- détermination de l'amplitude de l'impulsion ;
- application d'une fonction de quantification d'énergie (g) à l'amplitude déterminée ;

le procédé étant **caractérisé en ce que** la fonction de quantification d'énergie est paramétrée par un biais, le biais étant estimé par un procédé selon l'une quelconque des revendications 1 à 10.

**12.** Dispositif de détection d'un rayonnement ionisant, comportant différents pixels d'un détecteur pixelisé (1), chaque pixel ($10_{i,j}$) étant configuré pour collecter des porteurs de charges générés par une interaction du rayonnement ionisant dans le détecteur, et pour former une impulsion sous l'effet de la collecte des porteurs de charges, le dispositif comportant une unité de traitement (19) configurée pour mettre en oeuvre les étapes b) à f) d'un procédé selon l'une quelconque des revendications 1 à 10 à partir de chaque impulsion formée par au moins un pixel.

**Patentansprüche**

**1.** Verfahren zur Bestimmung einer Verzerrung ($\beta_{i,j}$), die mindestens ein Pixel eines Detektors (1) für ionisierende Strahlung beeinflusst, wobei der Detektor mehrere Pixel ($10_{i,j}$) umfasst, wobei jedes Pixel dazu ausgestaltet ist, Ladungsträger (6) zu sammeln, die durch eine Wechselwirkung (5) der ionisierenden Strahlung in dem Detektor erzeugt werden, und einen Impuls (S) unter der Wirkung der Erzeugung und des Sammelns der Ladungsträger zu bilden, wobei die Pixel gemäß einer Matrix verteilt sind, wobei das Verfahren umfasst:

a) nach dem Eintreten einer Wechselwirkung in dem Detektor, zu einem Detektionszeitpunkt (t), Bestimmen mindestens eines Pixels, das einen Impuls bildet, der einen zuvor bestimmten Amplitudenschwellenwert ($A_{th}$) während eines Detektionszeitintervalls (dt), das ausgehend von dem Detektionszeitpunkt (t) ermittelt wird, überschreitet;
b) Auswählen des Pixels, unter jedem beim Schritt a) bestimmten Pixel, das eine maximale Amplitude ($A_{max}$) während des Detektionszeitintervalls erzeugt, wobei das ausgewählte Pixel ein Pixel von Interesse ($10_{int}$) ist;
c) Auswählen mindestens eines entfernten Pixels ($10_{i,j-f}$), wobei die Position des entfernten Pixels in Bezug auf das Pixel von Interesse ($10_{int}$) zuvor bestimmt wird, so dass die Wirkung der Wechselwirkung, die von dem Pixel von Interesse detektiert wird, auf das entfernte Pixel als vernachlässigbar betrachtet wird;
d) Messen einer Amplitude eines Signals, das von jedem entfernten Pixel in dem Detektionszeitintervall erzeugt wird;
e) ausgehend von jeder beim Schritt d) durchgeführten Messung, Bestimmen einer Verzerrung ($\beta_{i,j}(t)$) zum Detektionszeitpunkt für jedes entfernte Pixel;

f) Aktualisieren einer Verzerrung ($\overline{\beta_{i,j}}(t)$, $\beta_{i,j}(t)$), die jedes entfernte Pixel beeinflusst, in Abhängigkeit von der zum Detektionszeitpunkt bestimmten Verzerrung.

2. Verfahren nach Anspruch 1, bei dem der Schritt a) umfasst:

- Bestimmen eines Detektionszeitpunkts, zu dem ein erstes Pixel einen ersten Impuls bildet, der den Amplitudenschwellenwert ($A_{th}$) überschreitet;
- Definieren des Detektionszeitintervalls (dt), das sich von dem Detektionszeitpunkt (t) aus erstreckt, wobei die Dauer des Detektionszeitintervalls vorbestimmt ist;
- Bestimmen, während des Detektionszeitintervalls, der Pixel, die einen Impuls bilden, der den Amplitudenschwellenwert überschreitet.

3. Verfahren nach einem der vorhergehenden Ansprüche, bei dem der Schritt b) ein Auswählen mehrerer entfernter Pixel ($10_{i,j}$-f) umfasst, wobei die Position jedes entfernten Pixels in Bezug auf das Pixel von Interesse zuvor bestimmt wird.

4. Verfahren nach einem der vorhergehenden Ansprüche, bei dem sich die Position jedes entfernten Pixels auf der Pixelmatrix in Abhängigkeit von der Position des Pixels von Interesse auf der Pixelmatrix ändert.

5. Verfahren nach einem der vorhergehenden Ansprüche, bei dem beim Schritt f):

- **jedes Pixel vor dem Detektionszeitpunkt von einer aktuellen Verzerrung ($\beta_{i,j}(t^-)$)** beeinflusst wird;
- die Verzerrung nach der Detektion der Wechselwirkung für jedes entfernte Pixel in **Abhängigkeit von der aktuellen Verzerrung ($\beta_{i,j}(t^-)$)** und der zum **Detektionszeitpunkt bestimmten Verzerrung ($\beta_{i,j}(t)$)** aktualisiert wird.

6. Verfahren nach Anspruch 5, bei dem die Aktualisierung der Verzerrung durch eine **gewichtete Summe der aktuellen Verzerrung ($\beta_{i,j}(t^-)$)** und der Verzerrung zum **Detektionszeitpunkt ($\beta_{i,j}(t)$)** durchgeführt wird.

7. **Verfahren nach Anspruch 6, bei dem die Verzerrung ($\beta_{i,j}(t)$)** eines entfernten Pixels ($10_{i,j}$-f), zum Detektionszeitpunkt, von einem Gewichtungsfaktor (**$k_{i,j}$**) beeinflusst wird, der in Abhängigkeit von einer Anzahl von Aktualisierungen der Verzerrung (**$n_{i,j}$**),

die für das entfernte Pixel seit einer Initialisierung durchgeführt wurden, variabel ist, so dass der Beitrag der zum Messzeitpunkt gemessenen Verzerrung umso größer ist, je geringer die Anzahl der seit der Initialisierung durchgeführten Aktualisierungen der Verzerrung ist.

8. Verfahren nach einem der vorhergehenden Ansprüche, umfassend, nach dem Schritt b):

- ein Auswählen mindestens eines benachbarten Pixels ($10_{adj}$) des Pixels von Interesse;
- ein Messen der Amplitude des Impulses, der von dem Pixel von Interesse erzeugt wird, und des Impulses, der von jedem benachbarten Pixel erzeugt wird;
- ein Schätzen einer während der Wechselwirkung freigesetzten Energie in Abhängigkeit von den an dem Pixel von Interesse und von jedem benachbarten Pixel gemessenen Amplituden.

9. Verfahren nach einem der vorhergehenden Ansprüche, bei dem jedes Pixel einen Spitzenwertdetektor ($15_{i,j}$) umfasst, so dass eine Wechselwirkung als detektiert betrachtet wird, wenn eine Amplitude eines Impulses (S), der aus dem Sammeln von Ladungen durch das Pixel resultiert, den vorbestimmten Amplitudenschwellenwert ($A_{th}$) überschreitet, wobei das Verfahren eine periodische Reinitialisierung jedes Spitzenwertdetektors umfasst.

10. Verfahren nach Anspruch 9, umfassend, zwischen zwei aufeinanderfolgenden Reinitialisierungen eines Spitzenwertdetektors ($15_{i,j}$), ein Schätzen eines Driftsignals ($V_{drift}(t')$, $\overline{V_{drift}}(t')$), das zu dem aus dem Sammeln von Ladungen durch das Pixel resultierenden Signal addiert wird, wobei das Verfahren derart ist, dass beim Schritt e) das zum Detektionszeitpunkt ($V_{drift}(t')$, $\overline{V_{drift}}(t')$) geschätzte Driftsignal von der Verzerrung ($\beta_{i,j}(t)$) subtrahiert wird.

11. Verfahren zum Schätzen einer Energie, die Ladungsträgern (6) entspricht, die von einem Pixel ($10_{i,j}$) eines pixelierten Detektors (1) für eine ionisierende Strahlung gesammelt werden, wobei jedes Pixel dazu ausgestaltet ist, durch eine Wechselwirkung (5) der ionisierenden Strahlung in dem Detektor erzeugte Ladungsträger zu sammeln und einen Impuls (S) unter der Wirkung des Sammelns der Ladungsträger zu bilden, wobei die Pixel gemäß einer Matrix verteilt sind, wobei das Verfahren, wenn die Amplitude eines von dem Pixel nach einem Sammeln von Ladungsträgern gebildeten Impulses einen vorbestimmten Schwellenwert ($A_{th}$) überschreitet, umfasst:

- Bestimmen der Amplitude des Impulses;

- Anwenden einer Energiequantisierungsfunktion (*g*) auf die bestimmte Amplitude; wobei das Verfahren **dadurch gekennzeichnet ist, dass** die Energiequantisierungsfunktion durch eine Verzerrung parametriert wird, wobei die Verzerrung mit einem Verfahren nach einem der Ansprüche 1 bis 10 geschätzt wird.

12. Vorrichtung zur Detektion einer ionisierenden Strahlung, die verschiedene Pixel eines pixelierten Detektors (1) umfasst, wobei jedes Pixel ($10_{i,j}$) dazu ausgestaltet ist, Ladungsträger zu sammeln, die durch eine Wechselwirkung der ionisierenden Strahlung in dem Detektor erzeugt werden, und einen Impuls unter der Wirkung des Sammelns der Ladungsträger zu bilden, wobei die Vorrichtung eine Verarbeitungseinheit (19) umfasst, die dazu ausgestaltet ist, die Schritte b) bis f) eines Verfahrens nach einem der Ansprüche 1 bis 10 ausgehend von jedem von mindestens einem Pixel gebildeten Impuls umzusetzen.

## Claims

1. Method for determining a bias ($\beta_{i,j}$) affecting at least one pixel of a detector (1) of ionizing radiation, the detector comprising a plurality of pixels ($10_{i,j}$), each pixel being configured to collect charge carriers (6) generated by an interaction (5) of the ionizing radiation in the detector, and to form a pulse (S) under the effect of the generation and collection of the charge carriers, the pixels being distributed in a matrix array, the method comprising:

   a) following the occurrence of an interaction in the detector, at a detection time (t), determining at least one pixel forming a pulse that exceeds an amplitude threshold ($A_{th}$) defined beforehand, during a detection time interval (dt) established on the basis of the detection time (t);
   b) among each pixel determined in step a), selecting the pixel that generates a highest amplitude ($A_{max}$) during the detection time interval, the selected pixel being a pixel of interest ($10_{int}$);
   c) selecting at least one distant pixel ($10_{i,j-f}$), the position of the distant pixel, with respect to the pixel of interest ($10_{int}$), being defined beforehand, such that the effect of the interaction, detected by the pixel of interest, on the distant pixel, may be considered to be negligible;
   d) measuring an amplitude of a signal generated by each distant pixel in the detection time interval;
   e) on the basis of each measurement performed in step d), determining a bias ($\beta_{i,j}(t)$) at the detection time for each distant pixel;
   f) updating a bias ($\overline{\beta_{i,j}}(t), \beta_{i,j}(t)$) affecting each distant pixel depending on the bias determined at the detection time.

2. Method according to Claim 1, wherein step a) comprises:

   - determining a detection time, at which a first pixel forms a first pulse that exceeds the amplitude threshold ($A_{th}$);
   - defining the detection time interval (dt), which extends from the detection time (t), the duration of the detection time interval being predefined;
   - determining, in the detection time interval, pixels forming a pulse that exceeds the amplitude threshold.

3. Method according to any one of the preceding claims, wherein step b) comprises selecting a plurality of distant pixels ($10_{i,j-f}$), the position of each distant pixel with respect to the pixel of interest being defined beforehand.

4. Method according to any one of the preceding claims, wherein the position of each distant pixel, in the matrix array of pixels, changes depending on the position of the pixel of interest, in the matrix array of pixels.

5. Method according to any one of the preceding claims, wherein, in step f):

   - prior to the detection time, each pixel is affected by a current bias ($\beta_{i,j}(t^-)$);
   - following detection of the interaction, the bias is updated, for each distant pixel, depending on the current bias ($\beta_{i,j}(t^-)$) and on the bias ($\beta_{i,j}(t)$) determined at the detection time ($\beta_{i,j}(t)$).

6. Method according to Claim 5, wherein the bias is updated via a weighted summation of the current bias ($\beta_{i,j}(t^-)$) and of the bias at the detection time ($\beta_{i,j}(t)$).

7. Method according to Claim 6, wherein the bias ($\beta_{i,j}(t)$) of a distant pixel ($10_{i,j-f}$), at the detection time, is affected by a weighting factor ($k_{i,j}$) that varies as a function of a number of updates of the bias ($n_{i,j}$) that have been performed for the distant pixel since an initialization, such that the lower the number of updates of the bias that have been performed, since initialization, the higher the contribution of the bias measured at the measurement time.

8. Method according to any one of the preceding claims, comprising, following step b):

   - selecting at least one pixel ($10_{adj}$) adjacent the pixel of interest;

- measuring the amplitude of the pulse generated by the pixel of interest and of the pulse generated by each adjacent pixel;
- estimating an energy released in the course of the interaction depending on the amplitudes measured for the pixel of interest and for each adjacent pixel.

9. Method according to any one of the preceding claims, wherein each pixel comprises a peak detector ($15_{i,j}$), such that an interaction is considered to have been detected when an amplitude of a pulse (S), resulting from the collection of charge by the pixel, exceeds the predefined amplitude threshold ($A_{th}$), the method comprising a periodic reset of each peak detector.

10. Method according to Claim 9, comprising, between two successive resets of a peak detector ($15_{i,j}$), estimating a drift signal ($V_{drift}(t')$, $\overline{V}_{drift}(t')$) that adds to the signal resulting from the collection of charge by the pixel, the method being such that, in step e), the drift signal ($V_{drift}(t')$, $\overline{V}_{drift}(t')$) estimated at the detection time is subtracted from the bias ($\beta_{i,j}(t)$).

11. Method for estimating an energy corresponding to charge carriers (6) collected by a pixel ($10_{i,j}$) of a pixelated detector (1) for detecting ionizing radiation, each pixel being configured to collect charge carriers generated by an interaction (5) of the ionizing radiation in the detector, and to form a pulse (S) under the effect of the collection of the charge carriers, the pixels being distributed in a matrix array, the method comprising, when the amplitude of a pulse formed by the pixel, following a collection of charge carriers, exceeds a predefined threshold ($A_{th}$):

 - determining the amplitude of the pulse;
 - applying an energy-quantification function (*g*) to the determined amplitude;

 the method being **characterized in that** the energy-quantification function is parameterized by a bias, the bias being estimated using a method according to any one of Claims 1 to 10.

12. Device for detecting ionizing radiation, comprising various pixels of a pixelated detector (1), each pixel ($10_{i,j}$) being configured to collect charge carriers generated by an interaction of the ionizing radiation in the detector, and to form a pulse under the effect of the collection of the charge carriers, the device comprising a processing unit (19) configured to implement steps b) to f) of a method according to any one of Claims 1 to 10 for each pulse formed by at least one pixel.

**Fig. 1A**

**Fig. 1B**

**Fig. 2A**

**Fig. 2B**

**Fig. 3**

$10_{i,j-f}$
$10_{i,j-f}$
$10_{int}$
$10_{adj}$
$10_{adj}$
$10_{i,j-f}$

**Fig. 4A**

**Fig. 4B**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2018229470 A1

- US 2007145274 A1